# EUROPEAN PATENT SPECIFICATION

(11) **EP 4 318 121 B1**
(45) Date of publication and mention of the grant of the patent: **31.12.2025**
(21) Application number: 22780940.7
(22) Date of filing: 29.03.2022
(51) Int. Cl.: G03B 17/28, G03B 17/50, G03B 27/32

(54) **PRINTER DEVICE AND PRINTER-EQUIPPED DIGITAL CAMERA**
DRUCKERVORRICHTUNG UND MIT EINEM DRUCKER AUSGESTATTETE DIGITALKAMERA
DISPOSITIF D'IMPRIMANTE ET CAMÉRA NUMÉRIQUE ÉQUIPÉE D'UNE IMPRIMANTE

(30) Priority: 31.03.2021 JP 2021061453
(43) Date of publication of application: 07.02.2024
(73) Proprietor: FUJIFILM Corporation, Tokyo 106-8620 (JP)
(72) Inventor: KAYA, Akimasa, Saitama-shi, Saitama 331-9624 (JP)
(74) Representative: Meissner Bolte Partnerschaft mbB
(86) International application number: PCT/JP2022/015514
(87) International publication number: WO 2022/210729

(56) References cited:
- JP-A- 2000 089 351
- JP-A- 2000 356 823
- JP-A- 2005 300 838
- JP-A- 2006 159 644
- JP-A- 2008 137 792
- JP-A- 2019 148 612
- JP-U- H0 375 431
- US-A1- 2019 084 317

## Description

### BACKGROUND OF THE INVENTION

### 1. Field of the Invention

The present invention relates to a printer and a digital camera including a printer.

### 2. Description of the Related Art

Various mobile printers or digital cameras including a printer for recording images imaged by a digital camera or a smartphone on a recording medium such as an instant film have been on sale.

In general, a printer or a digital camera including a printer that uses an instant film as a recording medium has a configuration comprising a loading room, an exposure head, a transport roller, and a spreading roller. An instant film pack that accommodates a plurality of instant films in a case is loaded into the loading room. The exposure head exposes an image to the instant film transported from the loading room. The transport roller is positioned on a downstream side in a transport direction with respect to the exposure head, and transports the instant film in a state of pinching the instant film. The spreading roller is positioned on a downstream side in the transport direction with respect to the transport roller, and spreads a developer by crushing a developer pod of the instant film (for example, see JP2020-043548A). A further relevant prior art is US 2019/084317 A1.

### SUMMARY OF THE INVENTION

There are various sizes of instant films as the recording medium, and an instant film called a wide type in which a dimension in a width direction is larger than a dimension in the transport direction is distributed. The present applicant is considering using this wide-type instant film in the above-described printer or digital camera including a printer.

However, in a case where the wide-type instant film is used, it is considered that the instant film is curved in the width direction of the instant film due to an own weight before the instant film discharged from the instant film pack reaches a transport roller pair. In a case where the instant film is transported in a curved state and the exposure is performed by the exposure head and the developer is spread by the spreading roller, for example, there is a possibility that image quality deteriorates such as a case where an image elongated by the amount of curving is exposed or spreading unevenness is caused in the developer.

The present invention has been made to solve the above-mentioned problems, and an object of the present invention is to provide a printer and a digital camera including a printer capable of suppressing curving of an instant film due to an own weight and preventing deterioration in image quality.

In order to solve the above-mentioned problems, a printer according to an aspect of the present invention comprises a loading room, an exposure head, a transport roller, a spreading roller, and a support rib. An instant film pack is loaded into the loading room. The instant film pack comprises at least a plurality of instant films and a case which accommodates the instant films in a stacking manner and that has a feeding port for feeding the instant film formed therein. The exposure head exposes an image to the instant film transported from the loading room. The transport roller is disposed on the downstream side in a transport direction of the instant film with respect to the exposure head, and transports the instant film discharged from the instant film pack to a further downstream side in the transport direction. The spreading roller is disposed on a downstream side in the transport direction with respect to the transport roller, and spreads a developer by crushing the developer pod in a state of pinching the instant film. The support rib is provided between the loading room and the exposure head in the transport direction, and supports the instant film from a side facing the exposure head.

It is preferable that a plurality of the support ribs are provided in a width direction orthogonal to the transport direction, each of the support ribs includes a sliding surface that slides on one surface of the instant film, and the sliding surface is formed in a curved shape.

It is preferable that the support rib is disposed at a position where the support rib is spaced from an orbit of the instant film and the support rib slides in a case where the instant film is curved.

It is preferable that the support rib is formed integrally with a support member that protrudes from the exposure head toward the instant film, and the support member is fixed to the exposure head.

It is preferable that the loading room is formed in a box shape of which one surface is opened, a loading lid that covers the opened surface of the loading room is provided, and a film holding portion is provided in the loading lid, the film holding portion pressing a film press plate stored in the case, and the film holding portion includes a pressing member that touches the film cover member and a biasing member that biases the pressing member, and a plurality of the film holding portions are provided in the width direction and the transport direction in the loading lid. It is preferable that the biasing member is a spring member, and the spring member has a spring constant different for each film holding portion.

A digital camera including a printer according to an aspect of the present invention comprises the printer, and an imaging unit that includes an imaging optical system and images a subject image to output image data to the printer.

According to the present invention, it is possible to suppress the curving of the instant film due to the own weight and prevent the deterioration in the image quality.

### BRIEF DESCRIPTION OF THE DRAWINGS

Fig. 1 is a front perspective view of a digital camera including a printer.
Fig. 2 is a longitudinal cross-sectional view of a center of the digital camera including a printer.
Fig. 3 is a rear perspective view of the digital camera including a printer with a loading lid in a closed position.
Fig. 4 is a rear perspective view of the digital camera including a printer with the loading lid in an opened position.
Fig. 5 is a perspective view of an instant film pack.
Fig. 6 is a cross-sectional view of the instant film pack.
Fig. 7 is an exploded perspective view of the instant film pack.
Fig. 8 is a cross-sectional view of the instant film.
Fig. 9 is a cross-sectional view of a printer unit.
Fig. 10 is a perspective view of the printer unit in which a device housing is omitted.
Fig. 11 is a perspective view of the printer unit.
Fig. 12 is a perspective view of the device housing.
Fig. 13 is a perspective view of an edge part of an exposure head and a support member.
Fig. 14 is a perspective view of the support member.
Fig. 15 is a perspective view of the exposure head and the support member.
Fig. 16 is a cross-sectional view of a main part of an edge part of the support member.
Fig. 17 is a rear perspective view of the digital camera including a printer in which the loading lid is in the opened position and the instant film pack is loaded.
Fig. 18 is a traversal cross-sectional view of the digital camera including a printer into which the instant film pack is loaded.
Fig. 19 is an exploded perspective view of film holding portions.
Fig. 20 is a cross-sectional view illustrating the disposing of the film holding portions.
Fig. 21 is an explanatory diagram showing a positional relationship between a support rib and the instant film.

### DESCRIPTION OF THE PREFERRED EMBODIMENTS

### [Overview of digital camera including printer]

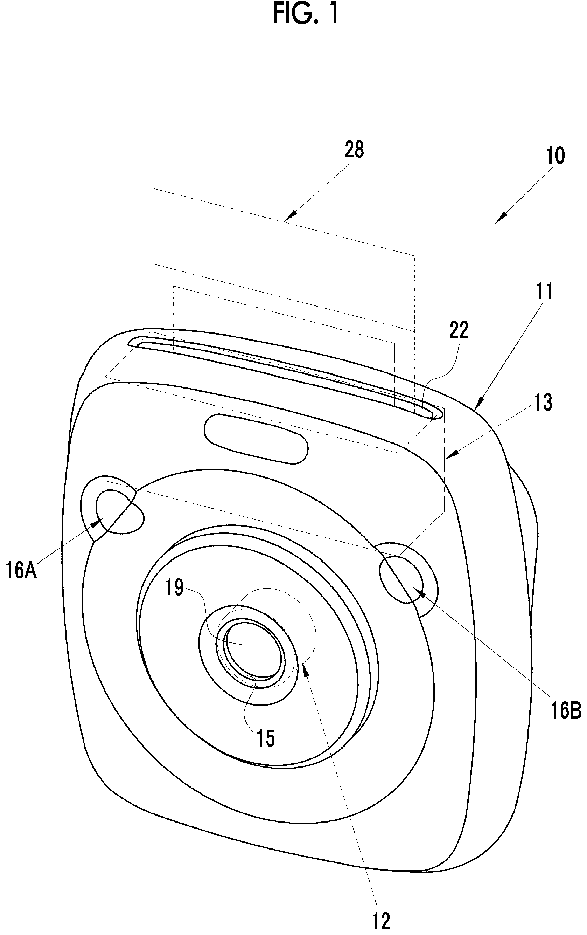

In Fig. 1, a digital camera 10 including a printer according to an embodiment of the present invention comprises a camera body 11, an imaging unit 12, and a printer unit 13. An imaging window 15 and two release switches 16A and 16B are provided on a front surface of the camera body 11.

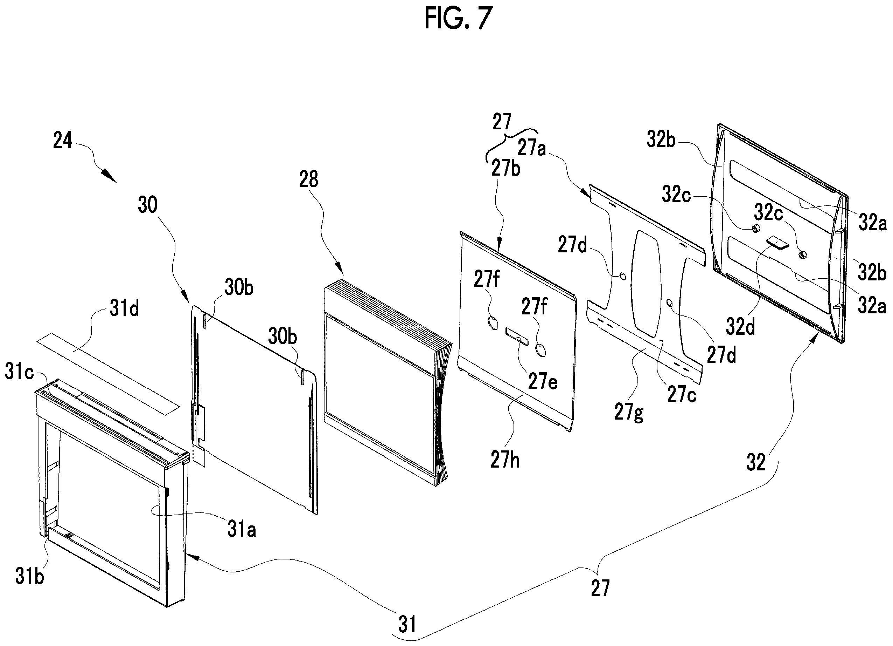

The camera body 11 has a substantially square shape viewed from a front surface. The digital camera 10 including a printer uses instant films 28 (see Fig. 7). The instant film 28 is a wide-type instant film having a dimension in a width direction longer than a dimension in a transport direction.

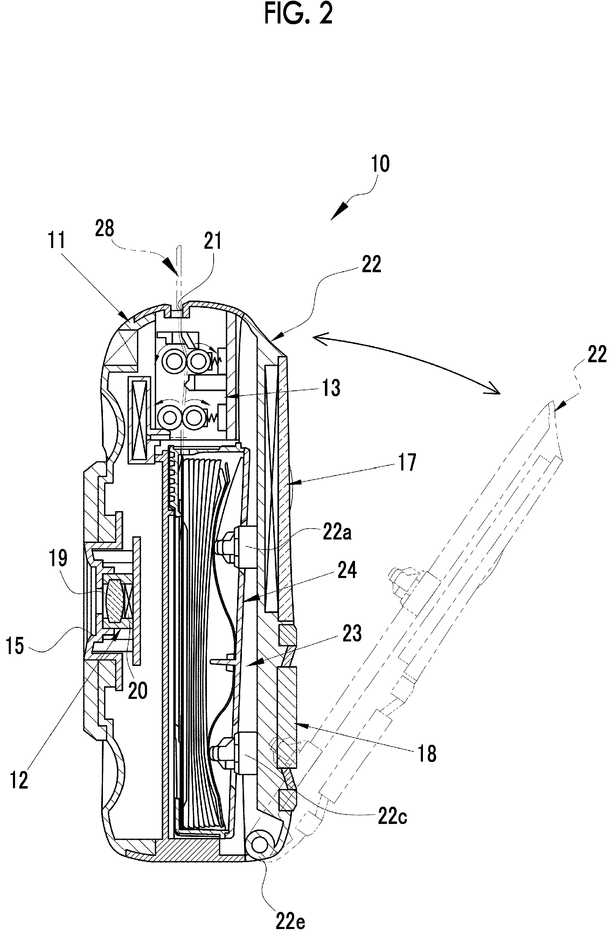

The imaging window 15 is disposed in a center on the front surface of the camera body 11. The imaging window 15 exposes an imaging optical system 19 (see Fig. 2) constituting the imaging unit 12.

As shown in Fig. 2, the imaging optical system 19 and a solid-state imaging element 20 are provided in the imaging unit 12. For example, the solid-state imaging element 20 is a complementary metal-oxide-semiconductor (CMOS) image sensor, and includes a light receiving surface constituted by a plurality of pixels (not shown) arrayed in a two-dimensional matrix shape. Each pixel includes a photoelectric conversion element, photoelectrically converts a subject image formed on the light receiving surface by the imaging optical system 19, and generates an imaging signal.

The solid-state imaging element 20 comprises signal processing circuits (all not shown) such as a noise removal circuit, an auto gain controller, and an A/D conversion circuit. The noise removal circuit performs noise removal processing on the imaging signal. The auto gain controller amplifies a level of the imaging signal to an optimum value. The A/D conversion circuit converts the imaging signal into a digital signal, and outputs the digital signal to a built-in memory (not shown) from the solid-state imaging element 20. An output signal of the solid-state imaging element 20 is image data (so-called RAW data) having one color signal for each pixel.

The solid-state imaging element 20 is driven by pressing at least one of the release switch 16A or 16B, and the subject image is imaged.

A film feeding port 21 is provided on a top surface of the camera body 11. The instant film 28 on which an image has been printed is discharged from the film feeding port 21.

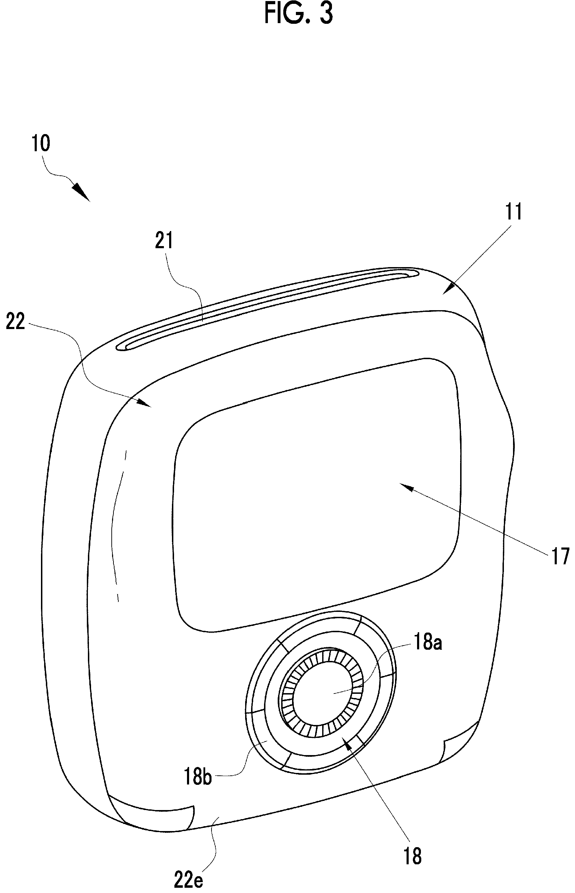

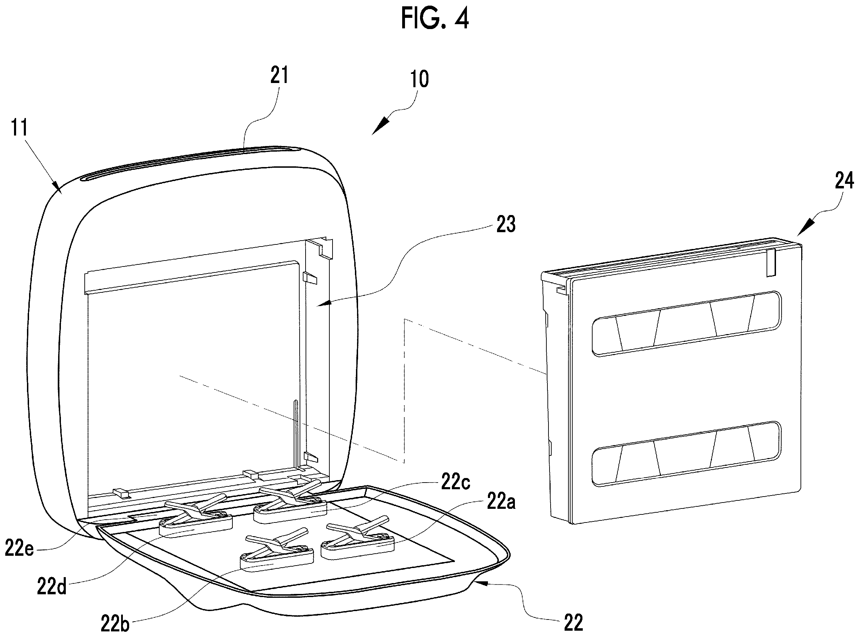

As shown in Fig. 3, a loading lid 22 is attached to a rear surface side of the camera body 11 through a hinge portion 22e. The hinge portion 22e rotatably supports the loading lid 22 between an opened position (state shown in Fig. 4) and a closed position (state shown in Fig. 3). A locking mechanism and an unlocking mechanism (all not shown) are provided between the camera body 11 and the loading lid 22, and in a case where the locking mechanism holds the loading lid 22 in the closed position and operates the unlocking mechanism, the loading lid 22 moves rotationally from the closed position to the opened position.

As shown in Fig. 4, an instant film pack 24 accommodating the instant film 28 is loaded into a film pack room 23 (loading room). A plurality of film holding portions 22a are provided on an inner surface of the loading lid 22.

A rear display unit 17 and an operating part 18 are provided on an outer surface of the loading lid 22, that is, a rear surface of the camera body 11. The rear display unit 17 is, for example, a liquid crystal display (LCD) panel. Image data items corresponding to one frame output from the solid-state imaging element 20 are sequentially input into the rear display unit 17, and are displayed as a live preview image.

A photographer presses at least one of the release switch 16A or 16B, and thus, imaging is started. Image data items are acquired from the solid-state imaging element 20 through the imaging. An image processing unit (not shown) performs known image processing on the image data items, and then the image data items are compressed. Examples of the image processing include matrix operation, demosaicing, γ correction, luminance conversion, color difference conversion, and resizing. The image data items on which the image processing and the compression are performed are recorded in a built-in memory (not shown) such as a flash memory provided within the camera body 11.

In a case where a menu switch 18a of the operating part 18 is pressed, the image is played and displayed on the rear display unit 17 based on the image data items recorded in the built-in memory. In a case where an image desired to be printed is displayed on the rear display unit 17, the photographer presses a print switch 18b of the operating part 18, and thus, printing processing by the printer unit 13 is started.

### [Configuration of instant film pack]

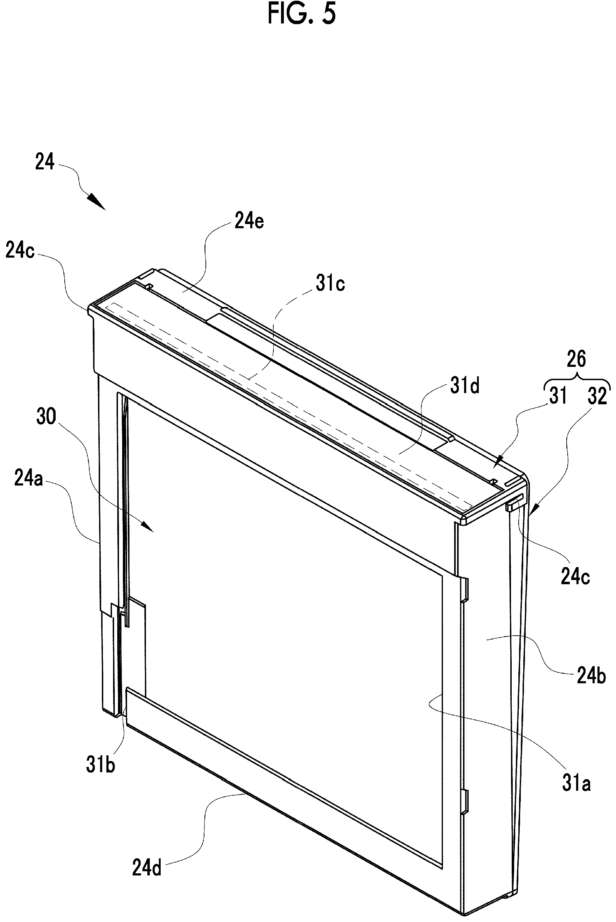

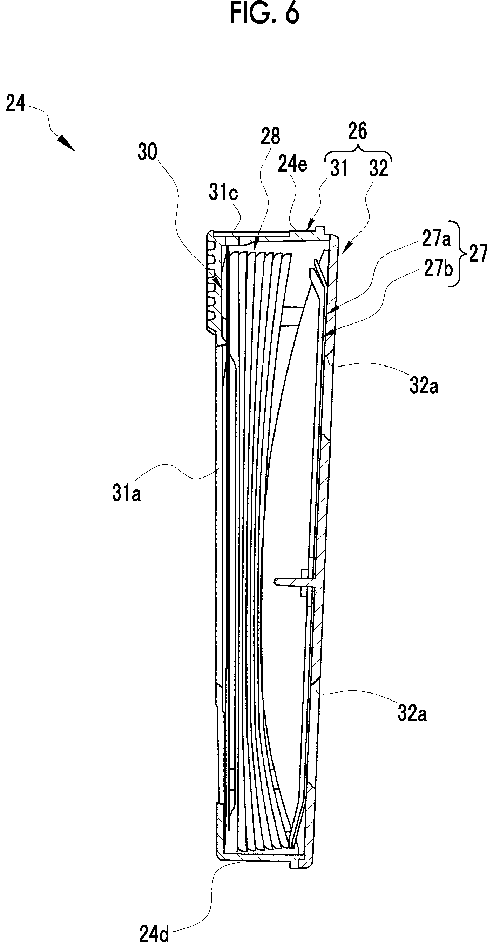

As shown in Figs. 5 and 6, the instant film pack 24 comprises a case 26, a film press plate 27, a plurality of instant films 28, and a film cover 30.

As shown in Fig. 6, the case 26 accommodates the plurality of instant films 28 and one film cover 30 in a stacking manner. The case 26 is made of a material such as a thermoplastic resin or a paper resin acquired by mixing the thermoplastic resin with cellulose. The case 26 includes a box-shaped case member 31, and a lid 32 that covers an opening formed in a rear surface side of the case member 31.

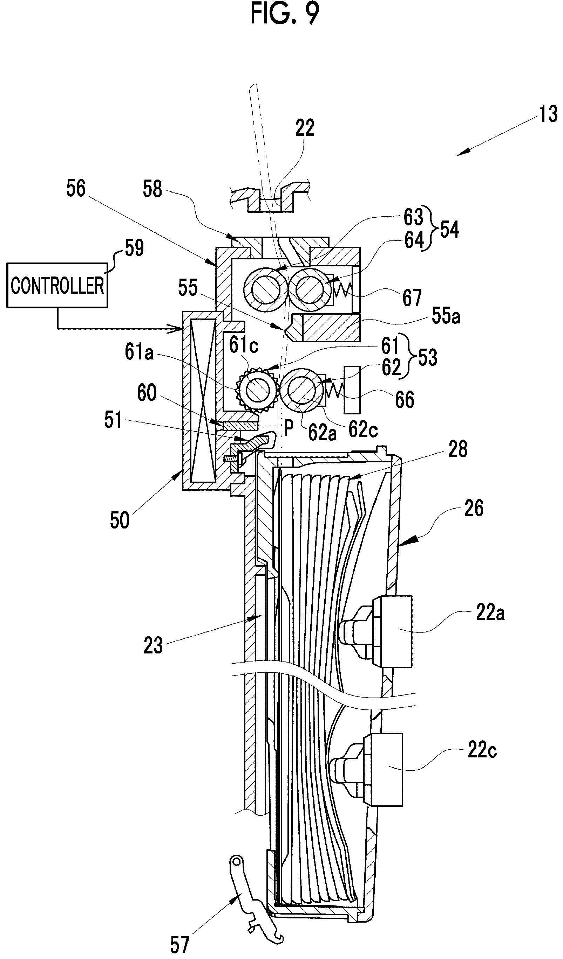

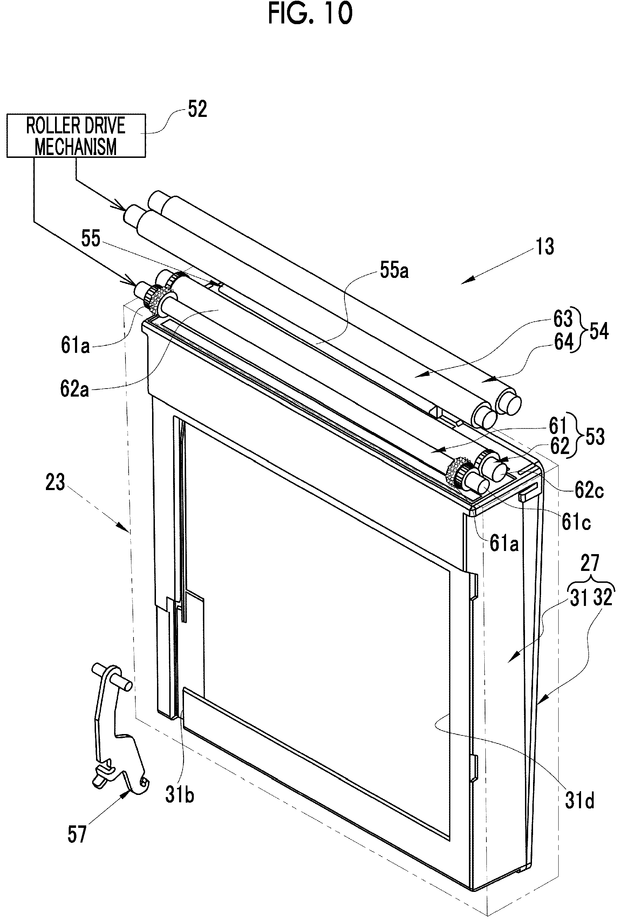

As shown in Fig. 7, an exposure aperture 31a for exposing the instant film 28 is formed in the case member 31. In the following description, a surface of the instant film pack 24 in which the exposure aperture 31a is formed is a "front surface", a surface opposite to the "front surface" is a "rear surface", a surface facing the film feeding port 21 of the camera body 11 is a "top surface", and a surface opposite to the "top surface" is a "bottom surface". The film cover 30 is overlapped before the instant film 28 positioned in a foremost layer initially set in the exposure aperture 31a within the case member 31. Accordingly, the exposure aperture 31a is lighttightly blocked by the film cover 30. A cut-off portion 31b into which a known claw member 57 (see Figs. 9 and 10) formed at the camera is inserted is formed in a lower portion of the exposure aperture 31a.

A feeding port 31c is formed on a top surface of the case member 31. The feeding port 31c is formed in a slit shape. The instant films 28 or the film cover 30 are fed one by one outwards from the instant film pack 24 by the claw member 57 inserted into the cut-off portion 31b of the case member 31 through the feeding port 31c.

A light shielding seal 31d is pasted onto the case member 31 so as to close the feeding port 31c from the outside. The light shielding seal 31d is formed as a flexible sheet. The light shielding seal 31d is pasted onto only one edge of a long side of the feeding port 31c so as not to hinder the instant film 28 or the film cover 30 when the instant film or the film cover passes through the discharge port 31c.

As shown in Fig. 7, the lid 32 includes a pair of openings 32a, a pair of unit support protrusions 32b, a pair of caulking pins 32c, and a support piece 32d. The pair of openings 32a are formed so as to be vertically spaced apart from each other by a predetermined interval, and serve as an entrance into which the film holding portions 22a provided in the digital camera 10 including a printer are inserted when the digital camera 10 including a printer is loaded.

The pair of unit support protrusions 32b are provided at both side edge portions of the lid 32 so as to be vertically long, and each has an arc shape of which a center portion protrudes toward the exposure aperture 31a. The unit support protrusions 32b touch both side edge portions on a rear surface of the instant film 28 positioned in a last layer, and push up the instant film 28 by each having the arc shape of which the center portion protrudes toward the exposure aperture 31a. Accordingly, a gap between the film cover 30 and the exposure aperture 31a is prevented from being formed.

The pair of caulking pins 32c are used for attaching the film press plate 27. The support piece 32d supports a center portion of the instant film 28 positioned in the last layer from behind, and prevents the instant film 28 from being curved in a direction in which the center portion is curved toward the lid 32.

The film press plate 27 includes two elastic sheets 27a and 27b made of a synthetic resin. The sheet 27a is pressed by the plurality of film holding portions 22a when the loading lid 22 is closed, and is curved so as to protrude toward the lid 32. An opening 27c and a pair of holes 27d are formed in the sheet 27a. The opening 27c is formed in a center portion of the sheet 27a so as to be vertically long, and the support piece 32d is inserted into this opening. The pair of caulking pins 32c are inserted into the pair of holes 27d, and the pair of holes are used for attaching the film press plate 27 to the lid 32.

An opening 27e and a pair of holes 27f are formed in the sheet 27b. The opening 27e is formed in a center portion of the sheet 27a, and the support piece 32d is inserted into this opening. The pair of caulking pins 32c are inserted into the pair of holes 27f. A lower end portion 27h of the sheet 27b is attached to a lower end portion 27g of the sheet 27a. Accordingly, the sheet 27b prevents the sheet 27a from being slack, and prevents light leak from the pair of openings 32a. The sheet 27b pushes up the instant film 28 in a substantially planar manner when the sheet 27a is elastically bent by the plurality of film holding portions 22a. As a result, the film cover 30 positioned in the foremost layer or the instant film 28 is pressed to the back side of the front surface of the case member 31.

L-shaped protrusions 24c are provided on both side surfaces 24a and 24b of the instant film pack 24. The protrusions 24c are protrusions provided to prevent the instant film pack 24 from being reversely loaded.

### [Configuration of instant film]

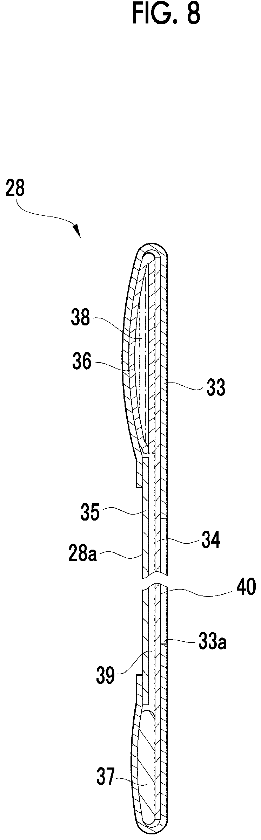

As shown in Fig. 8, the instant film 28 includes a mask sheet 33, a photosensitive sheet 34, a cover sheet 35, a developer pod 36, and a trap portion 37, and is a so-called mono-sheet type film. The mask sheet 33 is formed as a sheet made of a thin synthetic resin, and comprises a screen opening 33a. A photosensitive layer, a diffusion reflective layer, an image receiving layer, and the like are provided in the photosensitive sheet 34. The cover sheet 35 includes an exposure surface 28a facing an exposure head 50 to be described below.

The developer pod 36 is formed in a substantially bag shape, and contains a developer 38 therein. The developer pod 36 is pasted onto an end portion of the photosensitive sheet 34 close to the feeding port 31c, and is wrapped by an end portion of the mask sheet 33. The trap portion 37 is pasted onto an end portion of the photosensitive sheet 34 opposite to the feeding port 31c, and is similarly wrapped by the end portion of the mask sheet 33.

The photosensitive layer of the instant film 28 is irradiated with print light at the time of printing, and thus, the photosensitive layer is exposed. The developer pod 36 is torn at the time of development, and the developer 38 flows and is spread into a gap 39 between the photosensitive sheet 34 and the cover sheet 35. An image acquired through the exposure of the photosensitive layer is reversed by the diffusion reflective layer, and is transferred to the image receiving layer. By doing this, a positive image appears on a positive image observation surface 40 of the photosensitive sheet 34 exposed through the screen opening 33a.

The film cover 30 is formed as a sheet thinner than the instant film 28, and has light shielding properties and flexibility. The film cover 30 is a molded item made of a synthetic resin, and is made, for example, of polystyrene containing carbon black. That is, the film cover 30 has rigidity higher than the instant film 28. In a case where the instant film pack 24 is loaded into the film pack room 23 and is used, the film cover 30 is discharged to the film discharge port 21 by a spreading roller pair 54 (see Figs. 9 and 10) to be described later.

### [Configuration of printer unit]

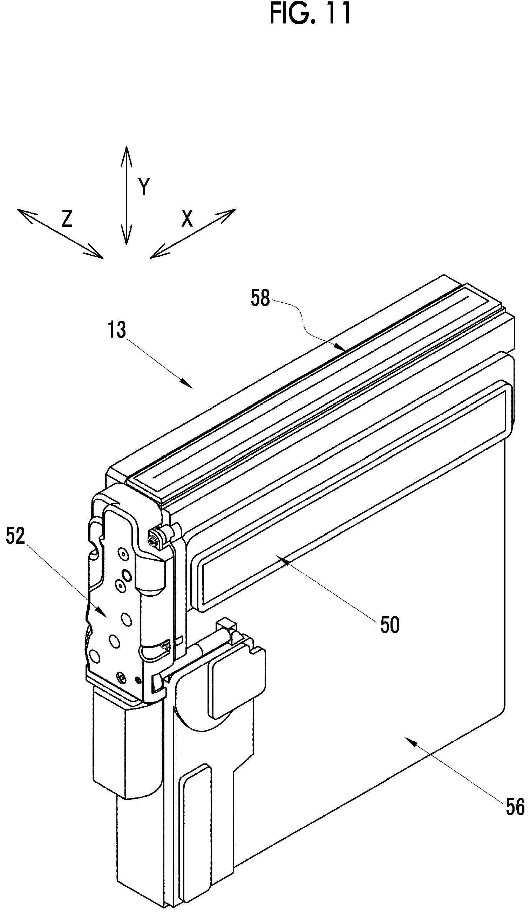

As shown in Figs. 9 and 10, the printer unit 13 includes the exposure head 50, a film support member 51, a roller drive mechanism 52, a transport roller pair 53, the spreading roller pair 54, a spreading control member 55, a device housing 56 (see Fig. 11), the claw member 57, a claw member drive mechanism (not shown), a discharge guide 58, and a controller 59.

In Fig. 10, although the device housing 56 and the like are omitted in order to avoid complication, in reality, the printer unit 13 is constituted by attaching the exposure head 50, the roller drive mechanism 52, the transport roller pair 53, the spreading roller pair 54, the spreading control member 55, the claw member 57, the claw member drive mechanism, and the like to the device housing 56 as shown in Fig. 11.

Hereinafter, a transport direction in which the transport roller pair 53 transports the instant film 28 is a Y direction, a width direction of the instant film 28 orthogonal to the Y direction is an X direction, and a direction orthogonal to the X direction and the Y direction is a Z direction.

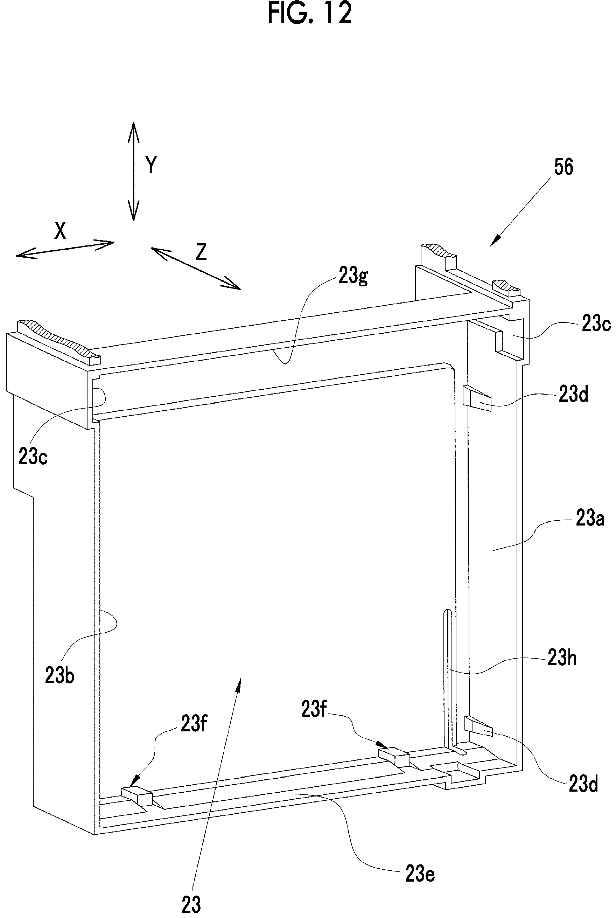

As shown in Fig. 12, the device housing 56 is formed in a box shape in which the rear surface side of the camera body 11 is opened, and the film pack room 23 is integrally provided. In addition to the film pack room 23, the device housing 56 has a frame portion that supports the exposure head 50, the roller drive mechanism 52, the transport roller pair 53, the spreading roller pair 54, the claw member 57, and the like, but these components are omitted in Fig. 12. The device housing 56 is made of a resin material.

L-shaped cut-off portions 23c are formed on both side surfaces 23a and 23b of the film pack room 23. The L-shaped cut-off portions 23c prevent the instant film pack 24 from being reversely loaded by being fitted with the L-shaped protrusions 24c provided on both the side surfaces 24a and 24b of the instant film pack 24.

Positioning protrusions 23d for positioning the instant film pack 24 in the X direction are provided in the film pack room 23. The positioning protrusions 23d are formed in a wedge shape in which a thickness gradually increases in the Z direction, that is, in a front-rear direction of the camera body 11.

Elastic members 23f that perform positioning in the Y direction are provided on a bottom surface 23e of the film pack room 23. The elastic member 23f is a cuboid member made of sponge or rubber. An elastic force in a case where the elastic members 23f try to return from a compressed state to an uncompressed state acts, and a top surface 24e of the instant film pack 24 is pressed against a top surface 23g of the film pack room 23. The top surface 23g of the film pack room 23 has an opening portion connected to the transport roller pair 53.

The film pack room 23 comprises a cut-off portion 23h. The claw member 57 enters the inside of the instant film pack 24 through the cut-off portion 23h, and the instant films 28 are fed one by one outwards from the instant film pack 24.

As described above, the instant film pack 24 is loaded into the film pack room 23. An image is recorded on the instant film 28 discharged from the instant film pack 24 by the printer unit 13.

As shown in Fig. 9, the device housing 56 includes the transport roller pair 53 and the spreading roller pair 54. Specifically, a bearing unit (not shown) that pivotally supports the transport roller pair 53 and the spreading roller pair 54 is provided in the device housing 56.

### [Configuration of transport roller pair and spreading roller pair]

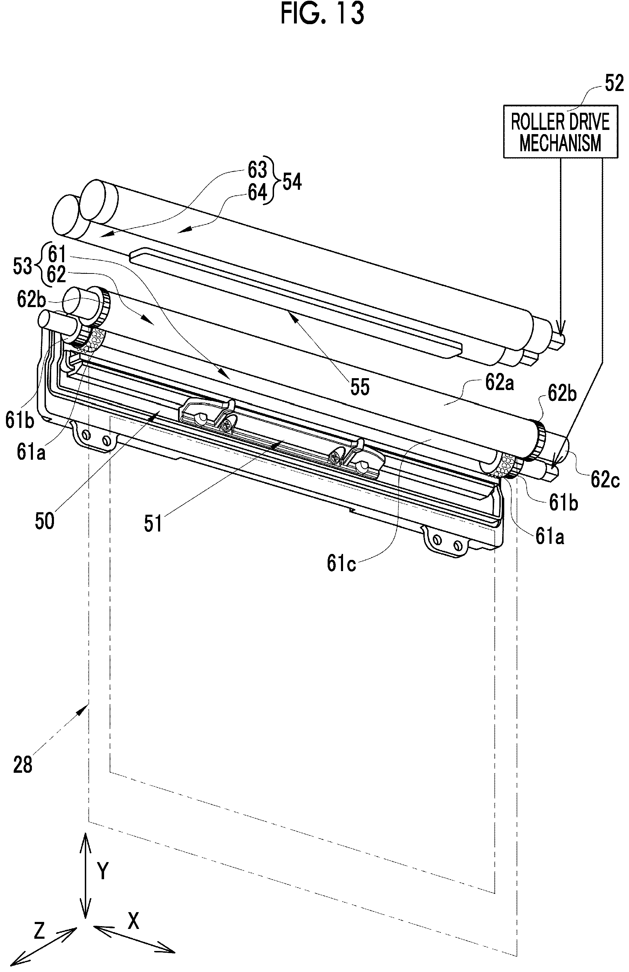

As shown in Fig. 13, the transport roller pair 53 and the spreading roller pair 54 are driven to be rotated by the roller drive mechanism 52, and transport the film cover 30 and the instant film 28. The roller drive mechanism 52 comprises, for example, a motor as a drive source and a drive transmission gear train that transmits a rotational driving force.

The transport roller pair 53 includes a capstan roller 61 and a pinch roller 62. The capstan roller 61 and the pinch roller 62 are disposed at positions at which these rollers pinch a transport passage of the instant film 28 (see Fig. 9). The capstan roller 61 is disposed on a side of the instant film 28 facing the exposure surface 28a. The capstan roller 61 includes a pair of columnar spike roller members 61a, a drive gear 61b, and a rotational shaft 61c that holds each spike roller member 61a and the drive gear 61b. A spike including a plurality of small protrusions is formed on a circumferential surface of the spike roller member 61a.

The pinch roller 62 is disposed on a side of the instant film 28 facing the positive image observation surface 40. The pinch roller 62 includes a roller member 62a, a drive gear 62b, and a rotational shaft 62c. Both end portions of the roller member 62a are supported so as to freely move by the device housing 56 within a thickness range of the instant film 28, and are pressed toward the capstan roller 61 by springs 66 as press mechanisms. Thus, the pinch roller 62 is elastically supported in a direction orthogonal to the transport direction of the instant film 28.

The drive gears 61b and 62b are provided at both end portions of the rotational shafts 61c and 62c and mesh with each other. A motor is connected to one end of the rotational shaft 61c via a drive transmission gear train. Thus, in a case where the motor rotates, the capstan roller 61 and the pinch roller 62 rotate in synchronization with each other. In the instant film 28 discharged from the instant film pack 24 can be transported to a further downstream side in the transport direction, that is, toward the spreading roller pair 54 while the spike roller member 61a reliably holds both side edge portions.

The spreading roller pair 54 includes spreading rollers 63 and 64, and is disposed on a downstream side of the transport roller pair 53 in the transport direction. The spreading roller 63 is disposed on a side of the instant film 28 facing the exposure surface 28a. The spreading roller 64 is disposed on a side of the instant film 28 facing the positive image observation surface 40. Both end portions of the spreading roller 64 are supported so as to freely move within the thickness range of the instant film 28 by the device housing 56, and are pressed toward the spreading roller 63 by springs 67 (see Fig. 9) as press mechanisms. Thus, the spreading roller 64 is elastically supported in a direction orthogonal to the transport direction of the instant film 28. A motor is connected to one end of the spreading roller 63 or 64 via a drive transmission gear train. Thus, in a case where a DC motor rotates, the spreading rollers 63 and 64 rotate in synchronization with each other.

The discharge guide 58 is disposed on the downstream side of the spreading roller pair 54 in the transport direction. The spreading roller pair 54 transports the instant film 28 transported by the transport roller pair 53 toward the discharge guide 58 in a state of pinching the instant film over the entire width. The instant film is sandwiched by the spreading roller pair 54, and thus, the developer pod 36 of the instant film 28 is crushed. Accordingly, the developer is spread (unfolded) into the gap 39 (see Fig. 8). The instant film 28 fed from the spreading roller pair 54 is transported toward the discharge guide 58.

The spreading control member 55 (see Fig. 9) is provided between the transport roller pair 53 and the spreading roller pair 54. The spreading control member 55 touches the positive image observation surface 40 of the transported instant film 28, and rubs the positive image observation surface 40 of the instant film 28. Thus, the spreading control member 55 that controls a distribution of developer being spread extends in a direction parallel to the width direction of the instant film 28 being transported and orthogonal to the transport direction of the instant film 28. The spreading control member 55 is formed integrally with a plate-shaped support member 55a, and is fixed to the device housing 56 via the support member 55a.

A distal end of the spreading control member 55 protrudes toward the instant film 28 from a sandwiching position at which the spreading roller pair 54 sandwiches the instant film 28 on a cross section which is orthogonal to the exposure surface 28a of the instant film 28 being transported and is in parallel with the transport direction. Accordingly, the spreading control member 55 can securely rub the positive image observation surface 40 of the instant film 28.

The transport roller pair 53 transports the instant film 28 fed from the instant film pack 24 by the claw member 57 toward the film discharge port 21. An exposure position P (see Fig. 9) at which the exposure head 50 exposes the instant film 28 to the print light is positioned between the feeding ports 31c of the instant film pack 24 and the transport roller pair 53. That is, the transport roller pair 53 is disposed on the downstream side (the film discharge port 21 side) in the transport direction of the instant film 28 with respect to the exposure head 50. The exposure using the exposure head 50 is performed for a period during which the instant film is transported by the transport roller pair 53.

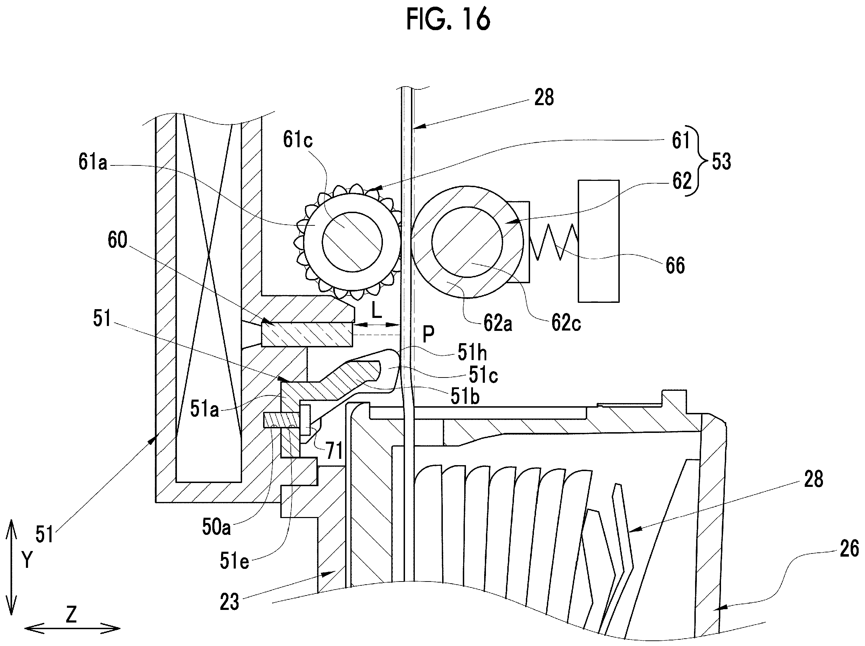

A lens 60 constituting the exposure head 50 requires a focal length of a predetermined value or longer. For example, a SELFOCK lens (registered trademark) is used as the lens 60 (see Fig. 16).

The controller 59 controls the exposure of the exposure head 50 based on the image data. The exposure by the exposure head 50 is performed by sequentially exposing line images on the instant film 28 while moving the instant film 28 for each line. Accordingly, an image corresponding to a single screen is exposed on the photosensitive layer of the instant film 28. The instant film 28 is subsequently transported toward the spreading roller pair 54 by the transport roller pair 53.

### [Configuration of support member]

As shown in Fig. 13, the film support member 51 protrudes from the exposure head 50 toward the instant film 28 and is formed in a plate shape extending in the X direction (width direction). The film support member 51 is fixed to the exposure head 50.

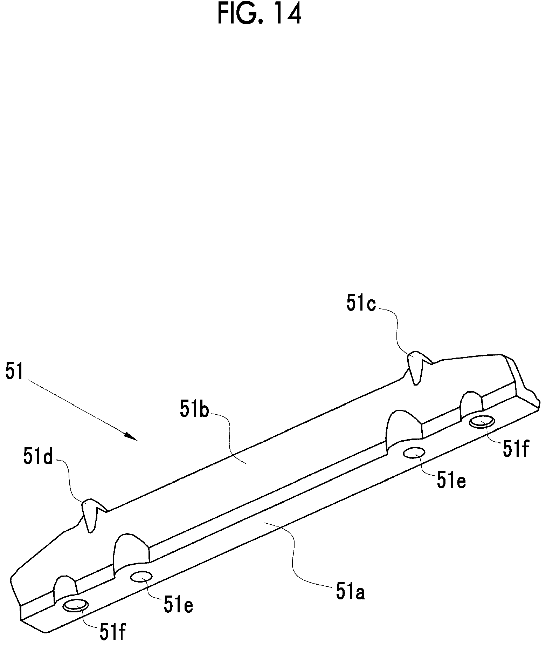

As shown in Fig. 14, in the film support member 51, a fixed piece 51a fixed to the exposure head 50, a protrusion piece 51b, and two support ribs 51c and 51d are integrally formed. The fixed piece 51a includes a fixing hole 51e and a positioning recess 51f. The protrusion piece 51b protrudes from the fixed piece 51a toward the instant film 28, and forms a substantially L-shaped cross section together with the fixed piece 51a.

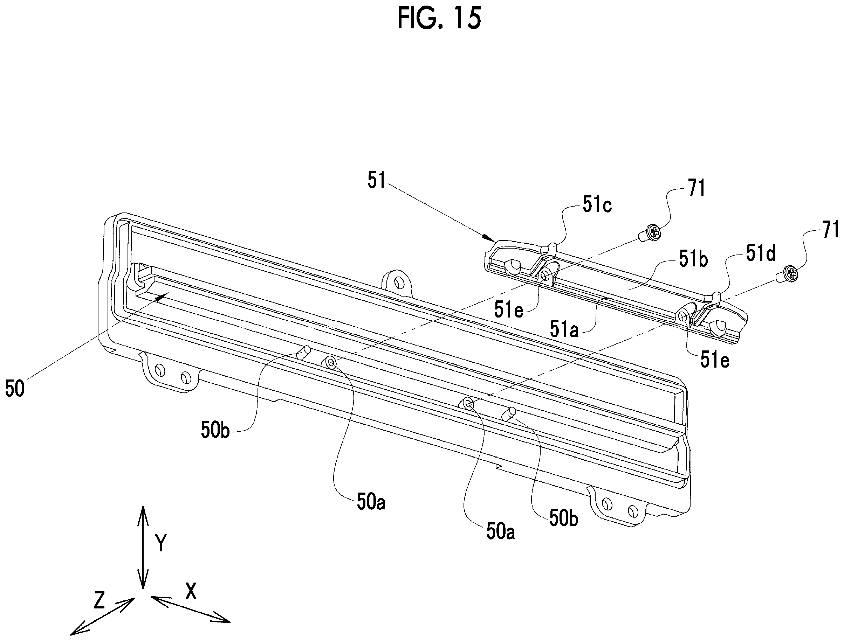

As shown in Fig. 15, the exposure head 50 has a female screw hole 50a and a positioning protrusion 50b. The positioning recess 51f of the film support member 51 fits into the positioning protrusion 50b of the exposure head 50. Accordingly, the film support member 51 is positioned with respect to the exposure head 50. On the other hand, in the film support member 51, a male screw 71 is attached to the fixing hole 51e. The male screw 71 is fastened and fixed to the female screw hole 50a of the exposure head 50. Accordingly, the film support member 51 is fixed to the exposure head 50.

The support ribs 51c and 51d protrude from the protrusion piece 51b toward the instant film 28 and are provided at intervals in the X direction. In the present embodiment, two support ribs 51c and 51d are provided in the X direction, but the present invention is not limited thereto, and three or more support ribs may be provided.

As shown in Fig. 16, the support ribs 51c and 51d are provided between the film pack room 23 and the exposure head 50 in the Y direction, and the instant film 28 supports the instant film 28 from a side facing the exposure head 50. The space between the film pack room 23 and the exposure head 50 as used herein means specifically a space between the film pack room 23 and the lens 60 of the exposure head 50.

Each of the support ribs 51c and 51d has a sliding surface 51h at a distal end close to the instant film 28. Although only the support rib 51c and the sliding surface 51h of the support rib 51c are shown in Fig. 16, the support rib 51d also has a sliding surface 51h having the same shape. The sliding surface 51h is formed in a curved shape. Specifically, the sliding surface 51h includes an arcuate curved surface having a central axis parallel to the X direction, and has a shape in which all corner portions are rounded.

The support ribs 51c and 51d are disposed at positions spaced from an orbit (position indicated by a dashed double-dotted line) of the instant film 28. The orbit of the instant film 28 as used herein refers to an orbit in a case where the instant film 28 is transported while maintaining a planar state without being curved. A position (position indicated by a solid line) through which the instant film 28 actually passes is spaced from an orbit (position indicated by a dashed double-dotted line). Thus, the support ribs 51c and 51d are disposed at positions where the support ribs slide in a case where the instant film 28 is curved.

As described above, the lens 60 constituting the exposure head 50 may require a focal length of a certain value or longer, and it is necessary to provide an interval of a dimension L from a front surface of the lens 60 to the instant film 28. The dimension L is, for example, more than or equal to 2.8 mm. Accordingly, the instant film 28 cannot be supported by the lens 60 that constitutes the exposure head 50. Therefore, the printer unit 13 comprises the support ribs 51c and 51d that support the instant film 28.

### [Configuration of film holding portion]

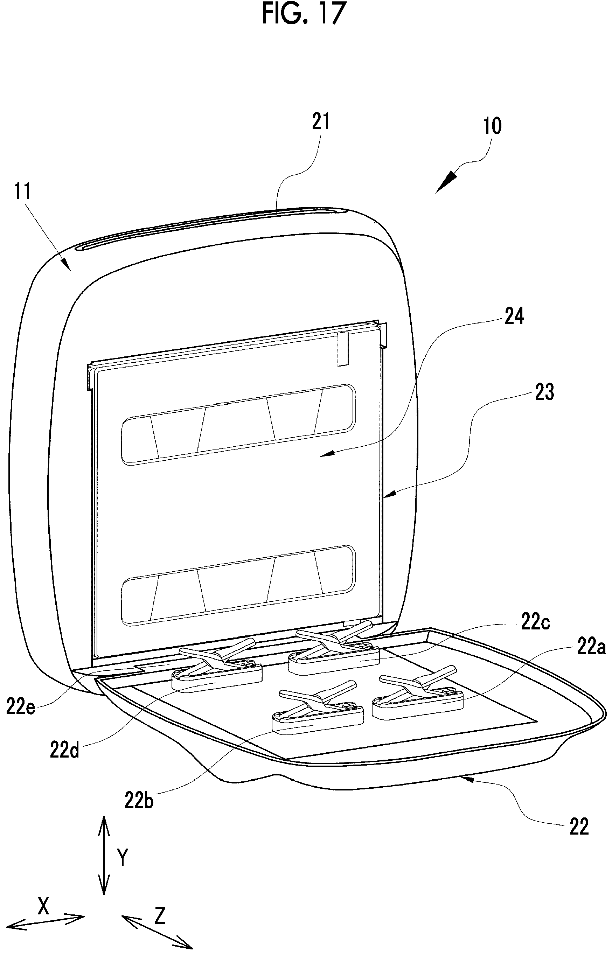

As shown in Fig. 17, in a case where the loading lid 22 is in the opened position, the film pack room 23 is opened, and in a case where the loading lid 22 is in the closed position, the loading lid 22 covers the opened rear surface of the film pack room 23 (state shown in Fig. 3). The instant film pack 24 is positioned in the X direction and the Y direction with respect to the film pack room 23, and is further positioned in the Z direction by positioning the loading lid 22 in the closed position. Specifically, the plurality of film holding portions 22a to 22d provided at the loading lid 22 are positioned in the Z direction with respect to the instant film pack 24.

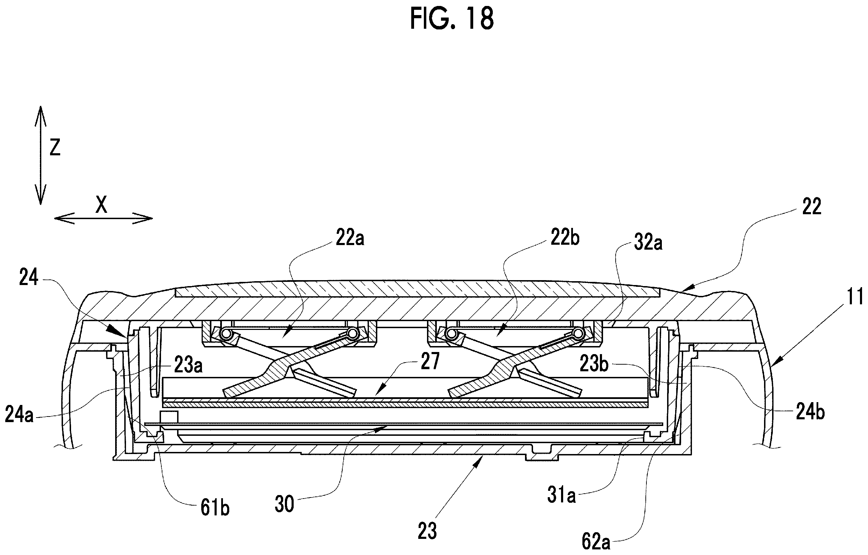

As shown in Fig. 18, in a case where the instant film pack 24 is loaded into the film pack room 23 and the loading lid 22 is positioned in the closed position, the plurality of film holding portions 22a to 22d pass through the openings 32a, are inserted into the instant film pack 24, and press the film press plate 27. Accordingly, the instant films 28 in the instant film pack 24 are pressed in a stacking direction. In Fig. 18, although the instant film 28 is not shown in order to prevent complication, in reality, the instant films 28 are stacked between the film press plate 27 and the film cover 30.

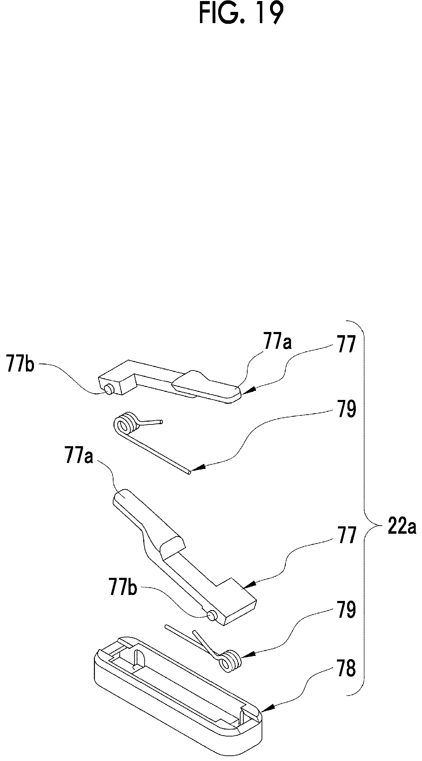

As shown in Fig. 19, the film holding portion 22a includes a pair of pressing members 77, a holding frame 78, and springs 79 (biasing members) (spring members). Since the film holding portions 22b to 22d have the same configuration as the film holding portions 22a, the description thereof will be omitted. The holding frame 78 holds the pressing members 77, and is fixed to an inner wall surface side of the loading lid 22.

The pair of pressing members 77 face each other such that positions of distal end portions 77a and rotational movement shafts 77b are opposite to each other, and are held by the holding frame 78. For example, the holding frame 78 is fixed to the loading lid 22 through screwing. The springs 79 are torsion coil springs, and are attached between the pressing members 77 and the holding frame 78. The springs 79 bias the pressing members 77 such that the distal end portions 77a move rotationally upward in the drawing. Accordingly, the distal end portions 77a press the film press plate 27.

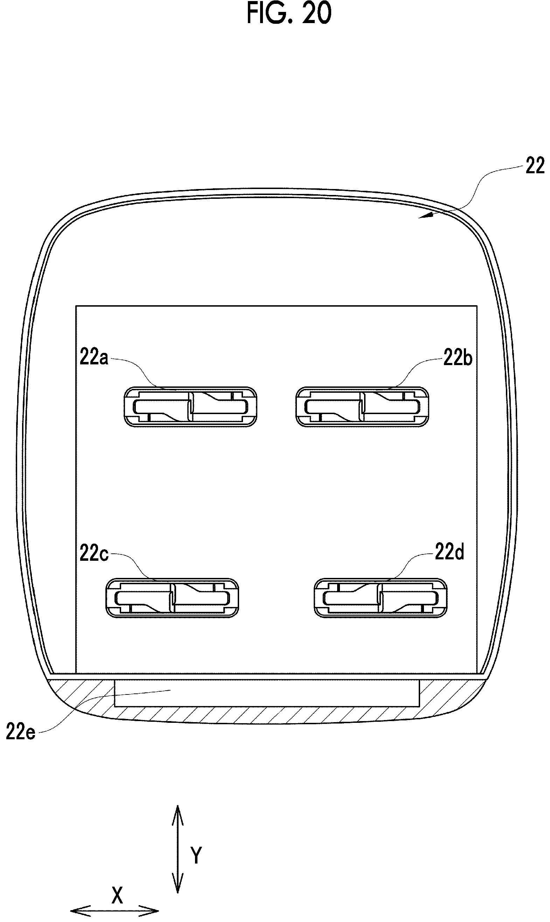

As shown in Fig. 20, the plurality of film holding portions 22a to 22d are provided in each of the X direction and the Y direction of the loading lid 22 in a case where the loading lid 22 is in the closed position. That is, film holding portions 22a and 22b and film holding portions 22c and 22d are arranged in two rows in the Y direction, and further, the film holding portions 22b and 22b and the film holding portions 22c and 22d in each row are arranged side in the X direction.

The springs 79 constituting the film holding portions 22a to 22d may have different spring constants for each of the film holding portions 22a to 22d. In this case, for example, the spring constants of the springs 79 constituting the film holding portions 22a and 22d are made larger than the spring constants of the springs 79 constituting the film holding portions 22b and 22b.

As described above, in the digital camera 10 including a printer, the support ribs 51c and 51d that support the instant film 28 from the side facing the exposure head 50 are provided between the film pack room 23 and the exposure head 50 in the Y direction. Thus, even though the instant film 28 is curved due to an own weight, the support ribs 51c and 51d slide with the instant film 28. Accordingly, it is possible to prevent the deterioration in the image quality by suppressing the curving of the instant film 28. Since the plurality of support ribs 51c and 51d are provided, the sliding resistance received by the instant film 28 can be reduced.

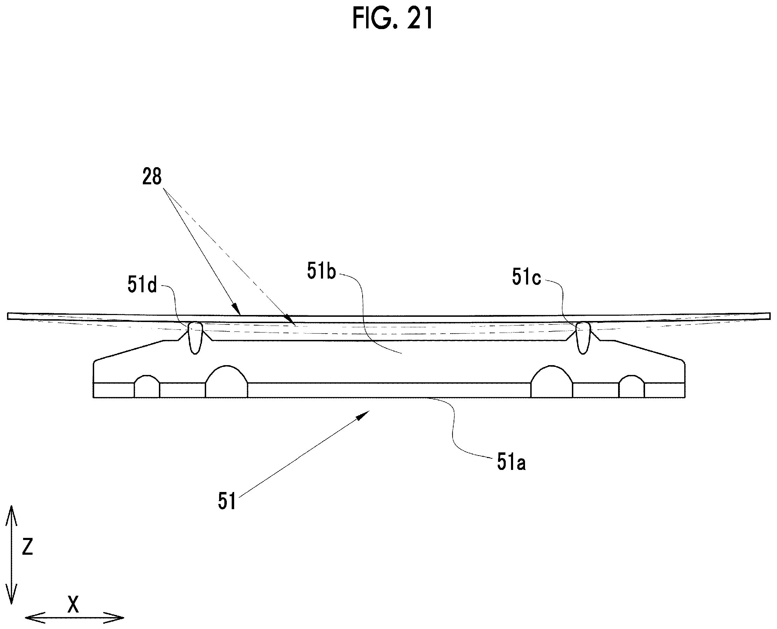

As shown in Fig. 21, in a case where the support ribs 51c and 51d are not provided, the instant film 28 may bend in the width direction (X direction) due to an own weight (state indicated by a dashed double-dotted line). In this case, the image quality may deteriorate by the amount of curving. On the other hand, in the present invention, since the printer unit comprises the support ribs 51c and 51d, the curving of the instant film 28 is suppressed to a minimum, and the instant film 28 can be transported to the exposure head 50 and the spreading roller pair 54 while maintaining a substantially planar state (state indicated by a solid line). Accordingly, the deterioration in the image quality can be prevented.

As described above, in the digital camera 10 including a printer, the plurality of film holding portions 22a to 22d are provided in the X direction and the Y direction of the loading lid 22. Accordingly, it is possible to reduce the spring constants of the springs 79 constituting the film holding portions 22a to 22d. In a case where one film holding portion is provided in a row as in the printer of the related art, a spring member having a spring constant equal to or greater than a certain value needs to be used in order to constantly press the instant film from a state where all the instant films remain in the instant film pack to a state where the last instant film is left. Accordingly, parts of the film holding portion become large, and an increase in a size of the printer is caused.

In a case where a spring member having a large spring constant is used as in the printer of the related art, a pressing force varies greatly between a state where the number of remaining instant films is large and a state where the last instant film is left. Accordingly, the planar state of the instant film may vary depending on the remaining number, there may be an influence on the transport performance by the transport roller pair, and the image quality may deteriorate. In a case where the variation of the pressing force due to the film holding portion is large, the instant film may be caught in the discharge port.

On the other hand, in the present invention, since the plurality of film holding portions 22a and 22b or the film holding portions 22c and 22d are provided in one row, the spring constants of the springs 79 constituting the film holding portions 22a to 22d can be reduced. Accordingly, the parts of the film holding portions 22a to 22d can be set to be smaller. Further, the spring constant of the spring 79 is set to be smaller, and thus, it is possible to reduce the variation of the pressing force due to the remaining number of instant films 28. Accordingly, it is possible to prevent the deterioration in the image quality.

Since the plurality of film holding portions 22a to 22d are provided in the loading lid 22 in the X direction and the Y direction, the spring constants of the springs 79 constituting the film holding portions 22a to 22d can be different. That is, a degree of freedom of the spring constant in designing the springs 79 constituting the film holding portions 22a to 22d is increased, and the variation of the pressing force due to the remaining number of instant films 28 can be further reduced.

In the above embodiment, although the coil spring is used as the spring 79, the spring 79 is not limited thereto, and other spring members such as a leaf spring may be used. In the above embodiment, although the example in which the present invention is applied to the digital camera including a printer is used, the present invention is not limited thereto, and the present invention may be applied to a single printer.

In the above embodiment, a hardware structure of a processing unit that executes various kinds of processing such as the controller 59 includes various processors to be described below. The various processors include a central processing unit (CPU) which is a general-purpose processor that functions as various processing units by executing software (program), a graphical processing unit (GPU), a programmable logic device (PLD) such as a field programmable gate array (FPGA) which is a processor capable of changing a circuit configuration after manufacture, a dedicated electric circuit which is a processor having a circuit configuration specifically designed to execute various processing, and the like.

One processing unit may be constituted by one of these various processors, or may be constituted by a combination of two or more processors of the same type or different types (for example, a combination of a plurality of FPGAs, a combination of a CPU and an FPGA, a combination of a CPU and a GPU, or the like). The plurality of processing units may be constituted by one processor. As an example in which the plurality of processing units are constituted by one processor, firstly, one processor is constituted by a combination of one or more CPUs and software as represented by computers such as clients and servers, and this processor functions as the plurality of processing units. Secondly, a processor that realizes the functions of the entire system including the plurality of processing units via one Integrated Circuit (IC) chip is used as represented by a system on chip (SoC). As described above, the various processing units are constituted by using one or more of the various processors as the hardware structure.

Further, more specifically, an electric circuitry in which circuit elements such as semiconductor elements are combined can be used as the hardware structure of these various processors.

### Explanation of References

10: digital camera including printer
11: camera body
12: imaging unit
13: printer unit
15: imaging window
16A: release switch
16B: release switch
17: rear display unit
18: operating part
18a: menu switch
18b: print switch
19: imaging optical system
20: solid-state imaging element
21: film discharge port
22: loading lid
22a to 22d: film holding portion
22e: hinge portion
23: film pack room
23a, 23b: both side surface
23c: cut-off portion
23d: positioning protrusion
23e: bottom surface
23f: elastic member
23g: top surface
23h: cut-off portion
24: instant film pack
24a, 24b: side surface
24c: protrusion
24e: top surface
26: case
27: film press plate
27a: sheet
27b: sheet
27c: opening
27d: hole
27e: opening
27f: hole
27g: lower end portion
27h: lower end portion
28: instant film
28a: exposure surface
30: film cover
31: case member
31a: exposure aperture
31b: cut-off portion
31c: feeding port
31d: light shielding seal
32: cover
32a: opening
32b: unit support protrusion
32c: caulking pin
32d: support piece
33: mask sheet
33a: screen opening
34: photosensitive sheet
35: cover sheet
36: developer pod
37: trap portion
38: developer
39: gap
40: image observation surface
50: exposure head
50a: female screw hole
50b: positioning protrusion
51: film support member
51a: fixed piece
51b: protrusion piece
51c, 51d: support rib
51e: fixing hole
51f: positioning recess
51h: sliding surface
52: roller drive mechanism
53: transport roller pair
54: spreading roller pair
55: spreading control member
55a: support member
56: device housing
57: claw member
58: discharge guide
59: controller
60: lens
61: capstan roller
61a: spike roller member
61b: drive gear
61c: rotational shaft
62: pinch roller
62a: roller member
62b: drive gear
62c: rotational shaft
63, 64: spreading roller
66, 67: spring
71: male screw
77: pressing member
77a: distal end portion
77b: rotational movement shaft
78: holding frame
79: spring
L dimension
P: exposure position

## Claims

1. A printer comprising:
a loading room (23) into which an instant film pack is loaded, the instant film pack including at least a plurality of instant films that each have a developer pod and a case that accommodates the instant films in a stacking manner and that has a feeding port for feeding the instant film formed therein;
an exposure head (50) that exposes an image to the instant film transported from the loading room;
a transport roller (53) that is disposed on a downstream side in a transport direction of the instant film with respect to the exposure head, the transport roller transporting the instant film discharged from the instant film pack to a further downstream side in the transport direction;
a spreading roller (54) that is disposed on the downstream side in the transport direction with respect to the transport roller, the spreading roller spreading a developer by crushing the developer pod in a state of pinching the instant film; and **characterised by**
a support rib (51c) that is provided between the loading room and the exposure head in the transport direction, the support rib supporting the instant film from a side facing the exposure head.

2. The printer according to claim 1,
wherein a plurality of the support ribs are provided in a width direction orthogonal to the transport direction,
each of the support ribs includes a sliding surface that slides on one surface of the instant film, and
the sliding surface is formed in a curved shape.

3. The printer according to claim 1 or 2,
wherein the support rib is disposed at a position where the support rib is spaced from an orbit of the instant film and the support rib slides in a case where the instant film is curved.

4. The printer according to any one of claims 1 to 3,
wherein the support rib is formed integrally with a support member (55a) that protrudes from the exposure head toward the instant film, and
the support member is fixed to the exposure head.

5. The printer according to any one of claims 1 to 4,
wherein the loading room is formed in a box shape of which one surface is opened,
a loading lid (22) that covers the opened surface of the loading room is provided,
a film holding portion (22a) is provided in the loading lid, the film holding portion pressing a film press plate (27) stored in the case, and
the film holding portion includes a pressing member (77) that touches the film press plate and a biasing member that biases the pressing member, and a plurality of the film holding portions are provided in the transport direction and a width direction orthogonal to the transport direction in the loading lid.

6. The printer according to claim 5,
wherein the biasing member is a spring member, and
the spring member has a spring constant different for each film holding portion.

7. A digital camera including a printer comprising;
the printer according to any one of claims 1 to 6; and
an imaging unit (12) that includes an imaging optical system (20) and images a subject image to output image data to the printer.

## Patentansprüche

1. Drucker, umfassend:
einen Laderaum (23), in den ein Sofortbild-Filmpaket geladen wird, wobei das Sofortbild-Filmpaket mindestens mehrere Sofortbilder enthält, die jeweils einen Entwicklerbehälter und ein Gehäuse, das die Sofortbilder stapelweise aufnimmt und das einen Zuführungsanschluss zum Zuführen des Sofortbildfilms, der darin gebildet ist, aufweist, aufweisen;
einen Belichtungskopf (50), der ein Bild auf den aus dem Laderaum transportierten Sofortbildfilm belichtet;
einen Transportroller (53), der in Bezug auf den Belichtungskopf auf einer Stromabwärtsseite in einer Transportrichtung des Sofortbildfilms angeordnet ist, wobei der Transportroller den aus dem Sofortbild-Filmpaket abgegebenen Sofortbildfilm zu einer weiteren Stromabwärtsseite in der Transportrichtung transportiert;
eine Verteilwalze (54), die in Bezug auf den Transportroller auf der Stromabwärtsseite in der Transportrichtung angeordnet ist, wobei die Verteilwalze einen Entwickler durch Zerkleinern des Entwicklerbehälters in einem Zustand des Klemmens des Sofortbildfilms verteilt; und
**gekennzeichnet durch**
eine Stützrippe (51c), die zwischen dem Laderaum und dem Belichtungskopf in der Transportrichtung vorgesehen ist, wobei die Stützrippe den Sofortbildfilm von einer Seite, die dem Belichtungskopf zugewandt ist, stützt.

2. Drucker nach Anspruch 1,
wobei mehrere der Stützrippen in einer Breitenrichtung senkrecht zu der Transportrichtung vorgesehen sind,
jede der Stützrippen eine Gleitfläche, die an einer Oberfläche des Sofortbildfilms gleitet, enthält, und
die Gleitfläche in einer gekrümmten Form gebildet ist.

3. Drucker nach Anspruch 1 oder 2,
wobei die Stützrippe an einer Position angeordnet ist, an der die Stützrippe von einer Bahn des Sofortbildfilms beabstandet ist und die Stützrippe in einem Fall, in dem der Sofortbildfilm gekrümmt ist, gleitet.

4. Drucker nach einem der Ansprüche 1 bis 3,
wobei die Stützrippe integral mit einem Stützelement (55a), das von dem Belichtungskopf zu dem Sofortbildfilm hin vorsteht, gebildet ist, und
das Stützelement an dem Belichtungskopf befestigt ist.

5. Drucker nach einem der Ansprüche 1 bis 4,
wobei der Laderaum in einer Kastenform, von der eine Oberfläche geöffnet ist, gebildet ist,
eine Ladeabdeckung (22), die die geöffnete Oberfläche des Laderaums abdeckt, vorgesehen ist,
ein Filmhalteabschnitt (22a) in der Ladeabdeckung vorgesehen ist, wobei der Filmhalteabschnitt eine Filmdruckplatte (27), die in dem Gehäuse gelagert ist, drückt, und
der Filmhalteabschnitt ein Druckelement (77), das die Filmdruckplatte berührt, und ein Vorspannelement, das das Druckelement vorspannt, enthält und mehrere der Filmhalteabschnitte in der Transportrichtung und einer Breitenrichtung senkrecht zu der Transportrichtung in der Ladeabdeckung vorgesehen sind.

6. Drucker nach Anspruch 5,
wobei das Vorspannelement ein Federelement ist, und
das Federelement eine Federkonstante, die für jeden Filmhalteabschnitt unterschiedlich ist, aufweist.

7. Digitalkamera, die einen Drucker enthält, wobei der Drucker umfasst:
den Drucker nach einem der Ansprüche 1 bis 6; und
eine Bildgebungseinheit (12), die ein Bildgebungsoptik (20) enthält und ein Motivbild aufnimmt, um Bilddaten an den Drucker auszugeben.

## Revendications

1. Imprimante comprenant :
une chambre de chargement (23) dans laquelle un pack de film instantané est chargé, le pack de film instantané incluant au moins une pluralité de films instantanés qui comportant chacun une capsule de révélateur et un boîtier qui accueille les films instantanés de manière empilée et qui comporte un orifice d'alimentation pour l'alimentation du film instantané formé dans celui-ci ;
une tête d'exposition (50) qui expose une image sur le film instantané transporté depuis la chambre de chargement ;
un rouleau de transport (53) qui est disposé sur un côté aval dans une direction de transport du film instantané par rapport à la tête d'exposition, le rouleau de transport transportant le film instantané éjecté du pack de film instantané vers un côté plus aval dans la direction de transport ;
un rouleau d'étalement (54) qui est disposé sur le côté aval dans la direction de transport par rapport au rouleau de transport, le rouleau d'étalement étalant un révélateur en écrasant la capsule de révélateur tout en pinçant le film instantané ; et
**caractérisée par**
une nervure de support (51c) qui est prévue entre la chambre de chargement et la tête d'exposition dans la direction de transport, la nervure de support supportant le film instantané depuis un côté faisant face à la tête d'exposition.

2. Imprimante selon la revendication 1,
dans laquelle une pluralité des nervures de support sont prévues dans une direction de largeur orthogonale à la direction de transport,
chacune des nervures de support inclut une surface de glissement qui glisse sur une surface du film instantané, et
la surface de glissement est formée en une forme courbée.

3. Imprimante selon la revendication 1 ou la revendication 2,
dans laquelle la nervure de support est disposée à une position où la nervure de support est espacée d'une orbite du film instantané et la nervure de support glisse dans un cas où le film instantané est courbé.

4. Imprimante selon l'une quelconque des revendications 1 à 3,
dans laquelle la nervure de support est formée de manière intégrale avec un élément de support (55a) qui fait saillie depuis la tête d'exposition vers le film instantané, et l'élément de support est fixé à la tête d'exposition.

5. Imprimante selon l'une quelconque des revendications 1 à 4,
dans laquelle la chambre de chargement est formée en une forme de boîte dont une surface est ouverte,
un couvercle de chargement (22) qui couvre la surface ouverte de la chambre de chargement est prévu,
une partie de maintien de film (22a) est prévue dans le couvercle de chargement, la partie de maintien de film pressant une plaque de pression de film (27) stockée dans le boîtier, et
la partie de maintien de film inclut un élément de pression (77) qui touche la plaque de pression de film et un élément de rappel qui sollicite l'élément de pression, et une pluralité des parties de maintien de film sont prévues dans la direction de transport et dans une direction de largeur orthogonale à la direction de transport dans le couvercle de chargement.

6. Imprimante selon la revendication 5,
dans laquelle l'élément de rappel est un élément de ressort, et
l'élément de ressort présente une constante de ressort différente pour chaque partie de maintien de film.

7. Appareil photographique numérique incluant une imprimante comprenant :
la imprimante selon l'une quelconque des revendications 1 à 6 ; et
une unité d'imagerie (12) qui inclut un système optique d'imagerie (20), et image une image de sujet pour fournir des données d'images à l'imprimante.
